# EUROPEAN PATENT SPECIFICATION

(11) **EP 0 696 257 B1**
(45) Date of publication and mention of the grant of the patent: **15.10.1997**
(21) Application number: 93914924.1
(22) Date of filing: 24.05.1993
(51) Int. Cl.: C01B 3/56

(54) **PROCESS FOR THE REMOVAL OF GASEOUS IMPURITIES FROM A STREAM OF HYDROGEN**
VERFAHREN ZUR ENTFERNUNG VON GLASFÖRMIGEN VERUNREINIGUNGEN AUS EINEM WASERSTOFFSTROM
PROCEDE D'ELIMINATION DES IMPURETES GAZEUSES D'UN COURANT D'HYDROGENE

(30) Priority: 29.04.1993 IT MI930851
(43) Date of publication of application: 14.02.1996
(73) Proprietor: SAES GETTERS S.P.A., I-20151 Milano (IT)
(72) Inventor: SUCCI, Marco, I-20131 Milano (IT); SOLCIA, Carolina, I-20056 Grezzago (IT); D'ARCY, Lorimer, Sal Luis Obispo, CA 93401 (US)
(74) Representative: Adorno, Silvano
(86) International application number: PCT/IT93/00053
(87) International publication number: WO 94/25395

(56) References cited:
- EP-A- 0 240 270
- DE-C- 3 210 381
- GB-A- 2 177 079
- '13th Symposium of Fusion Technology' September 1984 , VARESE, ITALY see page 421 - page 426
- JOURNAL OF THE LESS COMMON METALS 1991 , NETHERLANDS pages 1157 - 1167 H. ALBRECHT ET AL. 'Application of SAES and HWT gas purifiers for the removal of impurities from helium-hydrogen gas mixtures'

## Description

The invention relates to an improved process for the removal of gaseous impurities from a stream of hydrogen, without residual traces of methane and without causing any formation of new methane, particularly suitable for the long lasting manufacture of purified hydrogen containing less than 50 and preferably 20 ppb of methane, namely 20 parts per 10⁹ parts (by volume).

The semiconductor industry is developing integrated circuits with ever more increasing line densities and it is thus required that the materials used in the manufacturing process be of ever increasing purity. As hydrogen is one of the gases used in these processes it is therefore necessary to ensure that its impurity content be kept as low as possible. The main gaseous impurities in commercial hydrogen are moisture (water vapour), oxygen, carbon monoxide (CO), carbon dioxide (CO₂) and mixtures thereof (CO_{X}), as well as nitrogen and methane, these last (N₂ and especially CH₄) being very hardly removable.

One method for the purification of hydrogen, since a long time, was the selective diffusion of hydrogen through palladium or palladium alloys. The rate of diffusion, however, increased with the pressure drop between the opposite sides of a Pd barrier; moreover the operating temperatures, for an economical throughput of purified hydrogen on Pd, was very high. In addition, as the hydrogen impurities are blocked by the Pd barrier, a removal device or expedient has to be provided for; US Patent N° 3,368,329 describes one of such apparatuses and another form of hydrogen purification by means of diffusion membranes is described in US Patent N° 3.534.531.

Such diffusion barriers however, while very efficient, show several drawbacks. Should the barrier be sufficiently thin as to ensure a high throughput of purified hydrogen, it would suffer from mechanical failure, with consequent undesirable leakage of impure hydrogen into the purified gas. The drawback is even more heavy because of the high pressure drop between the two sides of the barrier. If the barrier thickness gets increased, as to avoid mechanical failure, then excessively high temperatures have to be used for ensuring a high throughput of purified gas. The use of high temperatures in the presence of hydrogen is very dangerous, due to the potential existence of explosive hydrogen-oxygen (or air) mixtures, whenever excessively high temperatures are encountered, and an increased barrier thickness would involve the use of greater amounts of expensive palladium.

An article with the title "Removal of nitrogen and methane from hydrogen by metal getters" by H. Heimbach, H.R. Ihle and C.H. Wu, published in the Proceedings of the 13th Symposium on fusion Technology (SOFT), Varese, September 24-28, 1984, pp. 421-426, was talking about the removal of methane from hydrogen but found that a measurable depletion of CH₄ required excessively high temperature and than an "appreciable depletion of CH₄ occurs at about 600°C" when using Zr₃Al₂ or Zr(V_{0.83} Fe_{0.17})₂ as the getter material for the removal of impurities. But there is no indication of the problems which arise when there is the simultaneous presence of carbon monoxide (and/or carbon dioxide) and hydrogen.

Another article "Application of SAES and HWT gas purifiers for the removal of impurities from helium-hydrogen gas mixtures" by H. Albrecht, U. Kuhnes and W. Asel published in the Journal of Less-Common Metals, Vol. 172-174 (1991) pp. 1157-1167 describes the effect of the simultaneous removal of various impurities from tritium. At page 1165 it states "For CH₄ (impurity) the getter temperature of 200°C was obviously too low to cause any measurable sorption effect. At 300°C, however a surprising effect was found: an increase in concentration rather than the expected decrease. This can be explained by the formation of additional methane caused by the interaction of carbon monoxide and hydrogen during the passage through the getter". This effect is shown in Fig. 7 of the publication. It goes on to propose the use of two getter beds. The first bed is operated in the range 200-250°C to "reduce" the concentration of CO and H₂ and the second at a temperature of at least 400°C to remove effectively all the CH₄ and N₂. However when hydrogen (and not tritium) has to be purified, hydrogen should not obviously be "reduced" or "removed". As an alternative, Albrecht was suggesting to provide separation of hydrogen isotopes in molecular form by using a Pd-Ag diffused in a preliminar purification step. Such an expedient however would reintroduce all the disadvantages of palladium diffusors previously criticized and does not add any clarification to the problem of purifying hydrogen (and not tritium).

The co-pending European Application EP-A-696256 discloses a process for the purification of a flow of hydrogen consisting in contacting said flow first with a bed containing nickel compounds and comprising at least 1% of elemental nickel, possibly carried on a porous support; the flow of pre-purified hydrogen leaving said nickel bed is then contacted at a temperature comprised between 400 and 600°C with a bed of a non-evaporable getter material, chosen among the alloys of zirconium, manganese and iron, where up to 80% of zirconium may be replaced by titanium.

It is therefore one object of the present invention to provide an improved process for the purification of hydrogen free from one or more of the drawbacks of the prior art.

It is another object of the present invention to provide an improved process for the purification of hydrogen without requiring diffusion through palladium or Pd alloys.

It is still another object of the present invention to provide an improved process for the purification of hydrogen free from high pressure drops.

It is a further object of the present invention to provide an improved process for a long lasting manufacture of highly purified hydrogen free from any presence of methane and without any formation of new methane.

These and further advantages of the present invention will become clear to one skilled in the art by reference to the following disclosure and drawings.

In its broadest aspect the invention relates to an improved process for the removal of gaseous impurities from a stream of hydrogen, containing a first class of more easily removable impurities, like for instance CO_{X}, and a second class of more hardly removable impurities, mainly consisting of nitrogen and methane, essentially consisting of the following steps:
A. Said stream is first brought into contact, at 5-50°C, with one or more beds of a particulate material containing nickel and/or nickel compounds and optionally also a carrier, wherein at least 1% b.w. (preferably 5%) of the overall amount of nickel is present in the reduced (elemental) form, until said more easily removable impurities are removed in an essentially complete way;
B. The stream coming from step A, essentially free from said more easily removable impurities, but still containing said more hardly removable nitrogen and methane, is brought into contact with one or more beds of a non-evaporable getter material at a higher temperature.

Said hydrogen stream has suitably a pressure from 100 to 2000 kPa and the temperature of step (B) is suitably from 400 to 600°C and preferably from 500°C to 600°C.

The (mass) space velocity of the hydrogen stream is generally from about 0.01 to about 1 cm³/s, measured at standard pressure and temperature per gram of getter material and the amount of undesired methane is generally up to 5 ppm (5000 ppb).

The elemental nickel and the nickel compounds (e.g. oxide) used in first step (A) of the two-step process according to the invention are suitably supported on a carrier preferably consisting of a silicalite, a titanium- silicalite, a xerogel (see EP-A-537851) or a silica having an effective surface area equal to or higher than 100 m²/g (preferably 100-200 m²/g), as described in U.S. patent 4,713,224, and the nickel containing bed may be followed or (preferably) preceded by a second sorbing bed, essentially consisting of a natural or synthetic molecular sieve, like for instance natural or synthetic zeolites, silicalites or titanium-silicalites.

A getter material for the process according to the invention is suitably a getter alloy selected from:
a) the Ti-Ni or Zr-Ni alloys and preferably the alloys containing from 50 to 80% by weight titanium or zirconium (balance = nickel), wherein up to 50% b.w. of the nickel may be replaced by iron and/or manganese and or technetium and/or rhenium.
b) the high manganese Ti-V alloys (hereinafter HM alloys), described by U.S. patent 4,457,891;
c) the low manganese Ti-V alloys (hereinafter LM alloys).

The composition of said HM alloys is as follows (% by weight):
- titanium: 25 - 30.9%
- vanadium: 10 - 42%- manganese: 27.1 - 65.1%;
wherein from 2 to 2.2 other atoms are present per titanium atom.

Preferably, in said HM alloys, up to about 40% of the vanadium atoms may be replaced by iron atoms and up to 10% of the vanadium atoms may be replaced by aluminum atoms, wherein however no more than 40% of the vanadium atoms are replaced by the overall amount of said iron and aluminum atoms.

Moreover, in said HM alloys, the following optional modifications of the composition may also occur:
i) up to about 20% of the titanium atoms may be replaced by Ca, Y, La, misch metall or mixtures thereof;
ii) up to 0.2 atoms of Cr (per titanium atom) may replace a corresponding number of manganese and/or vanadium atoms.
iii) up to 0.1 Ni atoms and/or 0.05 Cu atoms (per titanium atom) may be present in the alloy, wherein preferably no more than about 0.1 atom of nickel and copper replace a corresponding number of manganese and/or vanadium atoms.

The composition of said LM (low-manganese) alloys is as follows (% by weight):
- titanium : 25 - 65%
- vanadium: 10 - 52%
wherein up to 40% b.w. of vanadium may be replaced by iron and wherein up to 20% b.w. of titanium may be replaced by manganese.

The getter material may be used in the form of a loose powder showing an average particle size between 1 and 500 micrometer, preferably between 1 and 250 micrometer and even better between 1 and 128 micrometer, but said powder may optionally be shaped, before use, in the form of formed bodies (pellets, tablets, rings, saddles and so on). The shaping may be carried out by compression or by sintering; in its turn said sintering may be carried out by simple heating or by exploiting both a heating and the presence of a second powder, as described e.g. in GB Patent Publication N° 2,077,487, in order to reach a satisfactory level of porosity. The average size of said bodies is generally equal to a few millimeter (0.5-5 mm).

The surface of the device containing said impurity adsorbing alloys, in contact with said stream of hydrogen, has to be very thoroughly polished in a uniform smooth way, in order to minimize contamination. The desired degree of smoothness of said surface may be expressed in terms of roughness of the inner wall surface, to be brought into contact with hydrogen; said roughness in its turn, according to preferred embodiment of the invention, has to be equal to or lower than 0.50 and preferably 0.25 micrometer, in terms of centerline average height (Rₐ). Although such values are not critical, they are recommended as a reliable safe condition.

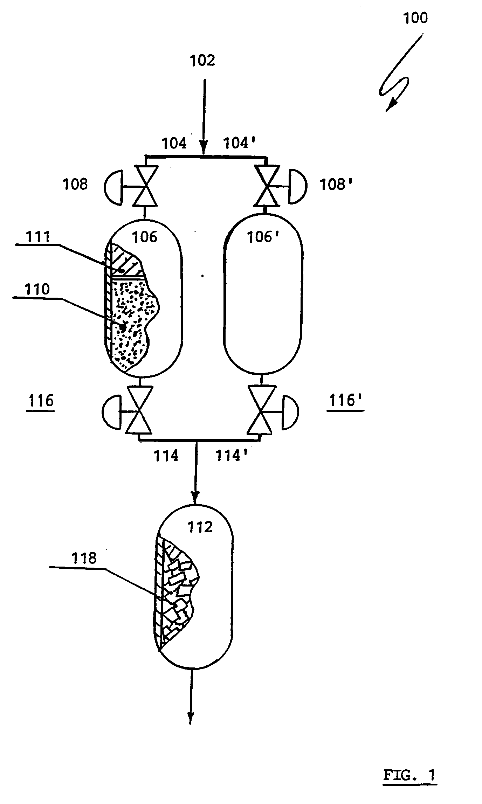

Referring now to the drawing of Fig. 1, there is shown a purifier 100 for the removal of impurities from an impurity-containing hydrogen stream, having a gas inlet 102 in fluid communication, through pipings 104, 104', with preliminar purification chambers 106, 106'. Valves 108, 108' can be alternately opened or closed, as to allow the passage of the impurity-containing gas through the first or the second of the preliminar purification chambers 106, 106', containing a bed of particulate material 110, based on supported nickel, whereby said bed removes, at a relatively low temperature, the more easily removable impurities (CO_{X} and so on). Chambers 106, 106' may in addition contain a natural or synthetic molecular sieve 111 to better promote the removal of carbon dioxide, or alternatively a separate molecular sieve may be provided for. Said chambers 106, 106' can also remove moisture down to trace levels, but do not remove nitrogen and methane.

It is thus possible to obtain a partially purified hydrogen containing only the second class of impurities, essentially consisting of nitrogen and methane. The partially purified gas leaves therefore preliminar purification chambers 106, 106' entering a final purification chamber 112, kept at a much higher temperature, with which chambers 106, 106' are in fluid communication, by means of pipings 114, 114'. Valves 116, 116' control the flow of the partially purified gas from either of the first preliminar purification chambers 106, 106', which allow the regeneration of nickel in one chamber whilst the other is working. In said final purification chamber 112 the partially purified hydrogen comes into contact with a bed of non-evaporable getter material 118.

The invention may be better understood by reference to the following examples wherein all parts and percentages are by volume unless otherwise indicated; such examples are merely supplied for illustrating purposes and do not limit in any case the spirit and the scope of the invention.

### EXAMPLE 1

A stream of hydrogen, containing 5 ppm by volume of methane (5000 ppb) as well as traces of nitrogen and CO_{X}, was allowed to flow, at a flow rate of 1,67 cm³/s, measured at standard pressure and temperature, at a pressure of 400 kPa and at a room temperature (lower than 40°C), through a first preliminar chamber (106) containing two beds of sorbing materials; upstream there gas a bed (111) consisting of a molecular sieve (synthetic zeolite) and downstream there was another bed (110) containing approximately 20 g of a material containing 58% b.w. of nickel (mainly in the form of nickel oxide) supported on a silica carrier having a surface area slightly higher than 100 m²/g, traded by the Engelhard Company as "Ni 0104T. At least 5%b.w. of said nickel was in the reduced state.

At the outlet of such preliminar chamber it was no more possible to retrieve any trace of CO_{X}. The gas stream was then allowed to flow, through a second (finishing) chamber, loaded with 40 g of a non-evaporable Ti₂Ni getter alloy, in the form of a loose powder, having an average particle size of 1-150 micrometer, consisting of (% b.w.): 62% Ti; 38% Ni. The temperature of said getter alloy was kept at 550°C throughout the test.

The level of the residual CH₄ concentration was measured, at the outlet of said second chamber, by means of a VALCO gas-chromatograph, working with a metastable helium ionization detector having a sensitivity limit of 5 ppb for methane.

At the beginning, the fresh getter alloy did completely adsorb all the methane and no trace of residual methane could be detected at the outlet of said second chamber; then the getter alloy began to be appreciably saturated and the test was arrested when the concentration of residual methane reached the level of 50 ppb. From the elapsed time, it was calculated that an overall amount of methane higher than 1 mg per gram of getter material had been adsorbed; this value is reported as "sorption capacity" in Table I.

### EXAMPLES 2 AND 3

Example 1 was repeated, replacing the specified getter alloy by other two different kinds of getter alloys according to the invention and precisely two getter alloys showing the following composition (% by weight):
- for example 2:
   56.7% Ti; 30.2% V; 6.6% Fe; 6.5% Mn (LM alloy);-
   for example 3:
   30.1% Ti; 14.4% V; 10.5% Fe; 44.9% Mn (HM alloy).
Data and results are reported in Table I.

**TABLE I**

| **EXAMPLE** | **METHANE SORBING MATERIAL** | **Mn (%)** | **SORPTION CAPACITY (mg/g)** |
|---|---|---|---|
| 1 | Ti₂Ni | 0 | > 1 |
| 2 | LM alloy | 6.5 | > 0.8 |
| 3 | HM alloy | 44.9 | > 1 |

## Claims

1. An improved process for the removal of gaseous impurities from a stream of hydrogen, containing a first class of more easily removable impurities, like for instance CO_{X}, and a second class of more hardly removable impurities, mainly consisting of nitrogen and methane, essentially consisting of the following steps:
A. Said stream is first brought into contact, at 5-50°C, with one or more beds of a particulate material containing nickel and/or nickel compounds, wherein at least 1% b.w. (preferably 5%) of the overall amount of nickel is present in reduced form, until said more easily removable impurities are removed in an essentially complete way;
B. The stream coming from step A, essentially free from said more easily removable impurities, but still containing said more hardly removable nitrogen and methane, is brought into contact with one or more beds of a non-evaporable getter material at a higher temperature.

2. The process of claim 1, wherein the pressure of said stream is from 100 to 2000 kPa and wherein the temperature of step B is from 400 to 600°C and preferably from 500 to 600°C.

3. The process of claim 1, wherein said nickel and/or nickel compounds are supported on a carrier essentially consisting of a silicalite, a titanium-silicalite, a xerogel or a silica having an effective surface area equal to or higher than 100² m²/g (preferably 100 - 200 m²/g).

4. The process of claim 1, wherein the nickel containing bed is followed or (preferably) preceded by a second sorption bed, consisting of one or more natural or synthetic molecular sieves and in particular of natural or synthetic zeolites, silicalites or titanium-silicalites.

5. The process of claim 1, wherein said getter material is contained in a housing with uniformly and smoothly polished inner walls, the roughness of said inner walls, expressed in terms of centerline average height (Rₐ), being equal to or lower than 0.50 and preferably 0.25 micrometer.

6. The process of claim 1, wherein the hydrogen space velocity is from about 0.01 to about 1 cm³/s, measured at standard pressure and temperature per gram of getter material and wherein the amount of the hardly removable methane is up to 5 ppm.

7. The process of claim 1, wherein said getter material is in the form of a loose powder having an average particle size from 1 to 500 and preferably from 1 to 250 micrometer.

8. The process according to claim 1, wherein said getter material is in the form of a shaped body, in particular pellets, having preferably an average size from 0.5 to 5 mm.

9. The process of claim 1, wherein said getter material is selected from:
a) the Ti-Ni or Zr-Ni alloys and preferably the alloys containing from 50 to 80% by weight titanium or zirconium (balance = nickel), wherein up to 50% b.w. of the nickel may be replaced by iron and/or manganese and/or technetium and/or rhenium.
b) the high manganese Ti-V alloys (HM alloys);
c) the low manganese Ti-V alloys (LM alloys).

10. The process of claim 9, wherein the composition of said HM alloys is as follows (% by weight):
- titanium: 25 - 30.9%
- vanadium: 10 - 42%
- manganese: 27.1 - 65.1%;
wherein from 2 to 2.2 other atoms are present per titanium atom.

11. The process of claim 10, wherein, in said HM alloys, up to about 40% of the vanadium atoms are replaced by iron atoms and up to 10% of the vanadium atoms are replaced by aluminum atoms, where in however no more than 40% of the vanadium atoms are replaced by the overall amount of said iron and aluminum atoms.

12. The process of claim 11, wherein, in said HM alloys, the following optional modifications of the composition do also occur:
i) up to about 20% of the titanium atoms may be replaced by Ca, Y, La, misch metall or mixtures thereof;
ii) up to 0.2 atoms of Cr (per titanium atom) may replace a corresponding number of manganese and/or vanadium atoms;
iii) up to 0.1 Ni atoms and/or 0.05 Cu atoms (per titanium atom) may be present in the alloy, wherein preferably no more than about 0.1 atom of nickel and copper replace a corresponding number of manganese and/or vanadium atoms.

13. The process of claim 9, wherein the composition of said LM (low-manganese) alloys is as follows (% by weight):
- titanium : 25 - 65%
- vanadium: 10 - 52%
wherein up to 40% b.w. of vanadium may be replaced by iron and wherein up to 20% b.w. of titanium may be replaced by manganese.

14. An apparatus for the removal of gaseous impurities from a stream of hydrogen, containing a first class of more easily removable impurities, like for instance CO_{X,} and a second class of more hardly removable impurities, mainly consisting of nitrogen and methane, comprising:
A) a gas inlet 102 in fluid communication, through pipings 104, 104', with preliminar purification chambers 106, 106', as well as valves 108, 108', which can be alternately opened or closed, to allow passage of the impurity-containing hydrogen through the first or the second of the preliminar purification chambers 106, 106', containing a bed of particulate material 110, based on supported nickel, and optionally containing also a second bed of a natural or synthetic molecular sieve material (111);
B) a final purification chamber 112, with which preliminar chambers 106, 106' are in fluid communication, by means of pipings 114, 114', and valves 116, 116', which control the flow of the partially purified hydrogen from either of the preliminar purification chambers 106, 106', which allows the regeneration of nickel in one chamber whilst the other is working, wherein said final purification chamber 112 contains a bed of non-evaporable getter material 118.

15. The apparatus of claim 14, wherein said getter material is selected from:
a) the Ti-Ni or Zr-Ni alloys and preferably the alloys containing from 50 to 80% by weight titanium or zirconium (balance = nickel), wherein up to 50% b.w. of the nickel may be replaced by iron and/or manganese and/or technetium and/or rhenium.
b) the high manganese Ti-V alloys (HM alloys);
c) the low manganese Ti-V alloys (LM alloys).

## Patentansprüche

1. Verbessertes Verfahren zur Entfernung von gasförmigen Verunreinigungen aus einem Wasserstoffstrom, der eine erste Klasse von leichter zu entfernenden Verunreinigungen wie CO_{X} und eine zweite Klasse von schwerer zu entfernenden, hauptsächlich aus Stickstoff und Methan bestehende Verunreinigungen enthält, das im wesentlichen aus den folgenden Schritten besteht:
A. Der Strom wird zunächst bei 5 bis 50°C mit einem oder mehreren Betten aus einem bestimmten Material in Kontakt gebracht, das Nickel und/oder Nickelverbindungen enthält, worin mindestens 1 Gew.% (vorzugsweise 5 Gew.%) der Gesamtmenge an Nickel in reduzierter Form vorliegt bis die leichter zu entfernenden Verunreinigungen im wesentlichen vollständig entfernt sind;
B. der von Schritt A kommende Strom, der im wesentlichen frei von den leichter zu entfernenden Verunreinigungen ist, jedoch noch schwerer zu entfernenden Stickstoff und Methan enthält, wird bei einer höheren Temperatur mit einem oder mehreren Betten eines nicht verdampfbaren Gettermaterials in Kontakt gebracht.

2. Verfahren nach Anspruch 1, worin der Druck des Stroms 100 bis 2000 kPa beträgt und worin die Temperatur in Schritt B 400 bis 600°C und vorzugsweise 500 bis 600°C beträgt.

3. Verfahren nach Anspruch 1, worin Nickel und/oder Nickelverbindungen auf einem Träger vorliegen, der im wesentlichen aus einem Silicalit, einem Titansilicalit, einem Xerogel oder einem Silica mit einer effektiven Oberfläche von 100m²/g oder mehr (vorzugsweise 100 bis 200 m²/g) besteht.

4. Verfahren nach Anspruch 1, worin dem Nickel enthaltenden Bett ein zweites Sorptionsbett folgt oder (bevorzugt) vorausgeht, das aus einem oder mehreren natürlichen oder synthetischen Molekularsieben und insbesondere aus natürlichen oder synthetischen Zeolithen, Silicaliten oder Titansilicaliten besteht.

5. Verfahren nach Anspruch 1, worin das Gettermaterial in einem Gehäuse mit gleichmäßig und glatt polierten inneren Wänden enthalten ist und die Rauhheit dieser inneren Wände, ausgedrückt in Mittelliniendurchschnittshöhe (Rₐ), 0,5 µm oder weniger und vorzugsweise 0,25 µm beträgt.

6. Verfahren nach Anspruch 1, worin die Wasserstoffraumgeschwindigkeit, gemessen bei Standarddruck und Standardtemperatur, 1 cm³/s pro Gramm Gettermaterial berägt und worin die Menge des schwer zu entfernenden Methans bis zu 5 ppm beträgt.

7. Verfahren nach Anspruch 1, worin das Gettermaterial in Form eines losen Pulvers mit einer Partikelgröße von 1 bis 500 und vorzugsweise 1 bis 250 µm vorliegt.

8. Verfahren nach Anspruch 1, worin das Gettermaterial in Form eines geformten Körpers, insbesondere Pellets mit einer mittleren Größe von vorzugsweise 0,5 bis 5 mm vorliegt.

9. Verfahren nach Anspruch 1, worin das Gettermaterial ausgewählt ist aus
a) den Ti-Ni oder Zr-Ni Legierungen und bevorzugt den Legierungen, die 50 bis 80 Gew.% Titan oder Zirkon (Ausgleich = Nickel) enthalten, worin bis zu 50 Gew.% des Nickels durch Eisen und/oder Mangan und/oder Technetium und/oder Rhenium ersetzt sein können;
b) hochmanganhaltige Ti-V Legierungen (HM-Legierungen);
c) niedermanganhaltige Ti-V Legierungen (LM-Legierungen).

10. Verfahren nach Anspruch 9, worin die Zusammensetzung der HM-Legierungen wie folgt ist (in Gew.%):
- Titan: 25 bis 30,9 %
- Vanadium: 10 bis 42 %
- Mangan: 27,1 bis 65,1 %,
worin 2 bis 2,2 andere Atome je Titanatom vorliegen.

11. Verfahren nach Anspruch 10, worin in den HM-Legierungen bis zu 40 % der Vanadiumatome durch Eisenatome und bis zu 10 % der Vanadiumatome durch Aluminiumatome ersetzt sind, worin jedoch nicht mehr als 40 % der Vanadiumatome durch die Gesamtmenge der Eisen- und Aluminiumatome ersetzt sind.

12. Verfahren nach Anspruch 11, worin in den HM-Legierungen wahlweise die folgenden Modifikationen in der Zusammensetzung auftreten können:
i) Bis zu 20 % der Titanatome können durch Ca, Y, La, Mischmetalle oder Mischungen hiervon ersetzt sein,
ii) bis zu 0,2 Cr-Atome (je Titanatom) können eine entsprechende Anzahl an Mangan- und/oder Vanadium-Atome ersetzen,
iii) bis zu 0,1 Ni-Atome und/oder 0,05 Cu-Atome (pro Titanatom) können in der Legierung vorliegen, wobei bevorzugt nicht mehr als 0,1 Nickel- und Kupferatome eine entsprechende Anzahl Mangan- und/oder Vanadiumatome ersetzen.

13. Verfahren nach Anspruch 9, worin die LM (niedermanganhaltigen) Legierungen die folgende Zusammensetzung haben (in Gew.%)
- Titan: 25 bis 65 %
- Vanadium: 10 bis 52 %,
worin bis zu 40 Gew.% Vanadium durch Eisen ersetzt sein kann und worin bis zu 20 Gew.% Titan durch Mangan ersetzt sein kann.

14. Eine Vorrichtung zur Entfernung gasförmiger Verunreinigungen aus einem Wasserstoffstrom, der eine erste Klasse von leichter zu entfernenden Verunreinigungen wie CO_{X} und eine zweite Klasse von schwerer zu entfernenden, hauptsächlich aus Stickstoff und Methan bestehenden Verunreinigungen enthält, welche
A) einen Gaseinlaß 102 enthält, der durch die Rohre 104, 104' in Fließverbindung mit den vorläufigen Vorreinigungskammern 106, 106' und Ventilen 108, 108' steht, die wahlweise geöffnet oder geschlossen werden können und den Durchfluß des Verunreinigungen enthaltenden Wasserstoffs durch die erste und zweite Vorreinigungskammer 106, 106' ermöglichen, welche ein Bett aus einem bestimmten, auf Nickel basierenden trägergebundenen Material 110 enthält und gegebenenfalls auch ein zweites Bett aus einem natürlichen oder synthetischen Molekularsiebmaterial 111 enthält,
B) eine Endreinigungskammer enthält, die durch die Rohre 114, 114' und die Ventile 116, 116', welche den Fluß aus einer der beiden vorläufigen Reinigungskammern 106, 106' steuern und somit eine Regenerierung von Nickel in einer Kammer erlauben, während die andere in Berieb ist, in Fließkontakt mit den Vorreinigungskammern 106, 106' steht und worin diese Endreinigungskammer 112 eine Schicht aus nicht verdampfbarem Gettermaterial 118 enthält.

15. Vorrichtung nach Anspruch 14, worin das Gettermaterial ausgewählt ist aus
a) den Ti-Ni oder Zr-Ni Legierungen und bevorzugt den Legierungen, die 50 bis 80 Gew.% Titan oder Zirconium (Ausgleich = Nickel) enthalten, worin bis zu 50 Gew.% des Nickels durch Eisen und/oder Mangan und/oder Technetium und/oder Rhenium ersetzt sein kann,
b) den hochmanganhaltigen Ti-V Legierungen (HM-Legierungen),
c) den niedermanganhaltigen Ti-V Legierungen (LM-Legierungen).

## Revendications

1. Un procédé perfectionné pour l'élimination des impuretés gazeuses d'un courant d'hydrogène contenant une première classe d'impuretés plus faciles à éliminer, telles que par exemple COₓ, et une seconde classe d'impuretés plus difficiles à éliminer, se composant principalement d'azote et de méthane, se composant essentiellement des opérations suivantes :
A. Ledit courant est tout d'abord amené en contact, à 5-50°C, avec un ou plusieurs lits d'une matière particulaire contenant du nickel et/ou des composés de nickel, où au moins 1% en poids (de préférence 5%) de la quantité totale de nickel est présent sous forme réduite, jusqu'à ce que lesdites impuretés plus faciles à éliminer soient éliminées d'une manière essentiellement complète ;
B. Le courant provenant de l'opération A, essentiellement exempt desdites impuretés plus faciles à éliminer, mais contenant encore ledit azote et ledit méthane plus difficile à éliminer, est amené en contact, à une température plus élevée, avec un ou plusieurs lits d'une matière absorbante non évaporable.

2. Le procédé de la revendication 1, dans lequel la pression dudit courant est de 100 à 2000 kPa, et dans lequel la température de l'opération B est de 400 à 600°C et de préférence de 500 à 600°C.

3. Le procédé de la revendication 1, dans lequel ledit nickel et/ou lesdits composés de nickel sont portés par un support se composant essentiellement d'une silicalite, d'une titane-silicalite, d'un xérogel ou d'une silice présentant une aire de surface effective égale ou supérieure à 100m²/g (de préférence 100 à 200m²/g).

4. Le procédé de la revendication 1, dans lequel le lit contenant du nickel est suivi ou (de préférence) précédé d'un second lit de sorption, se composant d'un ou de plusieurs tamis moléculaires naturels ou synthétiques, et en particulier de zéolites, de silicalites ou de titane-silicalites naturelles ou synthétiques.

5. Le procédé de la revendication 1, dans lequel ladite matière absorbante est contenue dans un boîtier présentant des parois internes polies de manière uniforme et lisse, la rugosité desdites parois internes, exprimées en termes de rugosité moyenne arithmétique (Rₐ), étant égale ou inférieure à 0,50 et de préférence 0,25 micromètre.

6. Le procédé de la revendication 1, dans lequel la vitesse spatiale de l'hydrogène est d'environ 0,01 à environ 1 cm³/s, mesuré à pression et température standard, par gramme de matière d'absorption et dans lequel la quantité de métal difficile à éliminer va jusqu'à 5 ppm.

7. Le procédé de la revendication 1, dans lequel ladite matière d'absorption se présente sous la forme d'une poudre de faible cohérence présentant une granulométrie moyenne de 1 à 500 et de préférence de 1 à 250 micromètres.

8. Le procédé de la revendication 1, dans lequel ladite matière d'absorption se présente sous la forme d'un corps conformé, en particulier de pastilles, présentant de préférence une granulométrie moyenne de 0,5 à 5 mm.

9. Le procédé de la revendication 1, dans lequel ladite matière absorbante est choisie parmi :
a) les alliages de Ti-Ni ou de Zr-Ni, et de préférence les alliages contenant de 50 à 80% en poids de titane ou de zirconium (reste = nickel), dans lesquels jusqu'à 50% en poids du nickel peut être remplacé par du fer et/ou du manganèse et/ou du technétium et/ou du rhénium ;
b) les alliages de Ti-V à haute teneur en manganèse (alliages HM) ;
c) les alliages de Ti-V à basse teneur en manganèse (alliages BM).

10. Le procédé de la revendication 9, dans lequel la composition desdits alliages HM est comme suit (% en poids) :
- titane : 25 à 30,9 %
- vanadium : 10 à 42%
- manganèse : 27,1 à 65,1 % ;
où il existe de 2 à 2,2 autres atomes par atome de titane.

11. Le procédé de la revendication 10, dans lequel, dans lesdits alliages HM, jusqu'à environ 40% des atomes de vanadium sont remplacés par des atomes de fer et jusqu'à 10% des atomes de vanadium sont remplacés par des atomes d'aluminium, où cependant pas plus de 40% des atomes de vanadium sont remplacés par la quantité totale desdits atomes de fer et d'aluminium.

12. Le procédé de la revendication 11, dans lequel, dans lesdits alliages HM, les modifications facultatives suivantes de la composition se produisent également :
i) jusqu'à environ 20% des atomes de titane peuvent être remplacés par Ca, Y, La, du "misch metal" ou des mélanges de ces derniers ;
ii) jusqu'à 0,2 atome de Cr (par atome de titane) peut remplacer un nombre correspondant d'atome de manganèse et/ou de vanadium ;
iii) jusqu'à 0,1 atome de Ni et/ou 0,05 atome de Cu (par atome de titane) peut être présent dans l'alliage, dans lequel de préférence pas plus d'environ 0,1 atome de nickel et de cuivre remplace un nombre correspondant d'atome de manganèse et/ou de vanadium.

13. Le procédé de la revendication 9, dans lequel la composition desdits alliages BM (basse teneur en manganèse) est comme suit (% en poids) :
- titane : 25 à 65%
- vanadium : 10 à 52%
dans lequel jusqu'à 40% en poids de vanadium peut être remplacé par du fer et dans lequel jusqu'à 20% en poids de titane peut être remplacé par du manganèse.

14. Un appareil pour l'élimination des impuretés gazeuses d'un courant d'hydrogène contenant une première classe d'impuretés plus faciles à éliminer, telles que par exemple COₓ, et une seconde classe d'impuretés plus difficiles à éliminer, se composant principalement d'azote et de méthane, comprenant :
A) une entrée de gaz 102 en communication de fluide, par l'intermédiaire de canalisations 104, 104', avec des chambres de purification préliminaires 106, 106', ainsi que des vannes 108, 108', qui peuvent alternativement être ouvertes ou fermées, pour permettre un passage de l'hydrogène contenant des impuretés à travers la première ou la seconde des chambres de purification préliminaires 106, 106', contenant un lit de matière particulaire 110, basé sur du nickel supporté, et contenant facultativement également un second lit d'une matière de tamis moléculaire naturelle ou synthétique (111) ;
B) une chambre de purification finale 112, avec laquelle des chambres préliminaires 106, 106' sont en communication de fluide, par l'intermédiaire de canalisations 114, 114', et de vannes 116, 116', lesquelles commandent l'écoulement de l'hydrogène partiellement purifié provenant de l'une quelconque des chambres de purification préliminaires 106, 106', ce qui permet la régénération du nickel dans une chambre tandis que l'autre est active, où ladite chambre de purification finale 112 contient un lit de matière absorbante non évaporable 118.

15. L'appareil de la revendication 14, dans lequel ladite matière absorbante est choisie parmi :
a) les alliages de Ti-Ni ou de Zr-Ni, et de préférence les alliages contenant de 50 à 80% en poids de titane ou de zirconium (reste=nickel), dans lesquels jusqu'à 50% en poids du nickel peuvent être remplacés par du fer et/ou du manganèse et/ou du technétium et/ou du rhénium ;
b) les alliages de Ti-V à haute teneur en manganèse (alliages HM) ;
c) les alliages de Ti-V à basse teneur en manganèse (alliages BM).
